# FASCICULE DE BREVET EUROPEEN

(11) **EP 1 366 105 B1**
(45) Date de publication et mention de la délivrance du brevet: **17.08.2005**
(21) Numéro de dépôt: 02704876.8
(22) Date de dépôt: 22.02.2002
(51) Int. Cl.: C08G 63/82, C08G 63/08

(54) **PROCEDE DE PREPARATION DE POLYESTERS AVEC DES FONCTIONS ACIDES LIBRES INTRACATENAIRES**
VERFAHREN ZUR HERSTELLUNG VON POLYESTERN MIT FREIEN SÄUREFUNKTIONEN ENTLANG DER KETTE
METHOD FOR PREPARING POLYESTERS HAVING INTRACHAIN FREE ACID FUNCTIONS

(30) Priorité: 27.02.2001 FR 0102630
(43) Date de publication de la demande: 03.12.2003
(73) Titulaire: Société de Conseils de Recherches et d'Applications Scientifiques ( S.C.R.A.S.), 75016 Paris (FR)
(72) Inventeur: CAZAUX, Jean-Bernard, F-30390 Aramon (FR); BRIGATI, Charles, F-30650 Rochefort du Gard (FR); LOUCHKOFF, Alexandre, F-13400 Aubagne (FR); DIANCOURT, Francis, 28230 Epernon (FR)
(74) Mandataire: Bourgouin, André
(86) Numéro de dépôt international: PCT/FR2002/000655
(87) Numéro de publication internationale: WO 2002/068499

(56) Documents cités:
- EP-A- 1 158 014
- WO-A-00/35990
- US-A- 6 111 033
- CANESSA, G. ET AL.: POLYMER BULLETIN, vol. 6, 1982, pages 515-519, XP000926717
- KURAMOTO, NORIYUKI ET AL.: J. APPL. POLYM. SCI., vol. 29, 1984, pages 977-983, XP002183780

## Description

Les polymères biodégradables sont de plus en plus populaires et trouvent des applications dans des domaines très divers et en particulier l'agroalimentaire et la pharmacie. Dans le domaine pharmaceutique, l'emploi de polymères est devenu courant pour des applications chirurgicales (sutures et agrafes résorbables) et l'élaboration de formes galéniques à libération prolongée.

Parmi tous ces polymères, les plus courants résultent de la polymérisation par ouverture de cycle, d'esters cycliques d'hydroxyacides tels que les glycolides, lactides ou L-lactides. Ces polymérisations sont effectuées avec ces esters cycliques, initiées généralement par un hydroxyle (hydroxyacide lactique ou glycolique) et catalysées par des composés aussi variés que des sels d'étain (éthylhexanoate ou octoate) (WO 91/16368), des composés à base de métaux (isopropylate d'aluminium, dérivés d'étain, de zinc, ...) (Macromol. Chem. Phys., C 35, 379 (1995) ; S.Penczek et Coll., Macromol. Chem. Phys., 198, 1973 (1997) ; Xin-De Feng & Yan Jia, Macromol. Symp., 118, 625 (1997) ; T.M. Ovitt & coll., J. Am. Chem. Soc., 1999, *121*, 4072).

L'usage de tels polymères est devenu important pour "fixer" des principes actifs et en réguler la libération prolongée dans l'organisme. Un tel mécanisme est particulièrement applicable avec des substances médicamenteuses à haute activité et, dans cette série, les peptides constituent une famille de choix.

L'association d'un peptide et d'un polymère peut être effectuée soit par un phénomène "mécanique" comme la coacervation par exemple, soit par un mécanisme de liaison ionique, particulièrement favorable si le peptide comporte des groupements aminés salifiables.

C'est pour augmenter ce potentiel de liaisons qu'on s'est intéressé à l'augmentation des fonctions acides dans une même chaîne polymérique. En effet, un polymère ou copolymère à base de lactide ou de glycolide et initié à partir d'un alcool, ne comporte pas de fonction acide sur la chaîne. D'où la nécessité d'une fonction acide sur l'initiateur de polymérisation pour retrouver une fonction acide sur le polymère. C'est ainsi que des (poly)hydroxy(poly) acides tels que l'acide tartrique, l'acide malique et l'acide citrique ont pu être utilisés en tant qu'initiateur de chaînes pour augmenter le nombre de groupements carboxyliques sur la même chaîne (US 6 111 033).

Cependant l'emploi d'un hydroxyacide comme initiateur de polymérisation, présente parfois un inconvénient quant à la reproductibilité du polymère obtenu : en effet, à côté du mécanisme de polymérisation qui s'effectue à partir de la fonction alcool (initiale ou générée par l'ouverture du cycle), il se produit souvent un phénomène de transestérification entre la chaîne polyester formée et la fonction acide de l'initiateur.

Ainsi, il n'est pas évident de conserver, dans un polymère initié par exemple à l'acide tartrique, des fonctions acides libres au milieu (approximativement) de la chaîne polymère car, par transestérification, ces fonctions sont substituées et les acidités libres se trouvent rejetées en bout de chaîne. De plus, dans le cas de l'acide tartrique, il peut se produire un phénomène de dégradation de l'acide dans les conditions de polymérisation : par chauffage en milieu acide, l'acide tartrique se déshydrate en générant de l'eau et l'acide cetosuccinique qui se décarboxyle à son tour en acide pyruvique. L'eau générée peut ouvrir un ester cyclique et générer ainsi un initiateur "parasite".

La présente invention propose donc une technique qui permet d'obtenir des polymères avec des fonctions acides libres intracaténaires (c'est à dire des fonctions acides libres le long de la chaîne et approximativement en milieu de chaîne).

L'invention a donc pour objet un procédé de préparation de polyesters contenant plusieurs fonctions acides libres disposées en milieu de chaîne, par polymérisation par ouverture de cycle en présence d'un initiateur de chaîne : le diester benzylique de l'acide tartrique dont le radical phényle est éventuellement substitué.

Les fonctions acides de ce (poly)hydroxy(poly)acide sont protégées et stables dans le milieu réactionnel considéré. Le radical phényle peut être substitué par un ou plusieurs substituants identiques ou différents choisis parmi : nitro, alkoxy. Le groupe protecteur est choisi de préférence pour être éliminé en hydrolyse neutre.

L'invention a plus particulièrement pour objet un procédé tel que défini ci-dessus, caractérisé en ce que le polyester est à base de l'un des composés suivants : acide L-lactique, acide D-lactique, acide DL-lactique, ε-caprolactone, p-dioxanone, acide ε-caproïque, oxalate d'alkylène, oxalate de cycloalkylène, succinate d'alkylène, β-hydroxybutyrate, carbonate de triméthylène substitué ou non substitué, 1,5-dioxepan-2-one, 1,4-dioxepan-2-one, glycolide, acide glycolique, L-lactide, D-lactide, DL-lactide, méso-lactide ; et tous les isomères optiquement actifs, les racémates ou copolymères de ces derniers.

L'invention a plus particulièrement pour objet également un procédé tel que défini ci-dessus, caractérisé en ce que le polyester est à base de l'un des composés suivants : acide L-lactique, acide D-lactique, acide DL-lactique, ε-caprolactone, p-dioxanone, acide ε-caproïque, carbonate de triméthylène substitué ou non substitué, glycolide, acide glycolique, L-lactide, D-lactide, DL-lactide, méso-lactide ; et tous les isomères optiquement actifs, les racémates ou copolymères de ces derniers. De préférence, le polyester est à base de l'un des composés suivants : acide L-lactique, acide D-lactique, acide DL-lactique, glycolide, acide glycolique, L-lactide, D-lactide, DL-lactide, méso-lactide ; et tous les isomères optiquement actifs, les racémates ou copolymères de ces derniers.

Le procédé de préparation selon l'invention comprend donc les étapes suivantes :
- préparation d'un polyester par polymérisation par ouverture de cycle en présence d'un initiateur de chaîne : le diester benzylique de l'acide tartrique ; le procédé de polymérisation par ouverture de cycle est mis en oeuvre selon les techniques connues de l'homme de l'art (J.Am.Chem.Soc ., 2000, 122, 1552 ; Polymer International 45, (1998) 60).
- déprotection des fonctions carboxy : les fonctions acides du (poly)hydroxy(poly)acide sont bien évidemment protégées par des groupements éliminables par un mécanisme permettant de conserver intactes les autres fonctions esters de la chaîne polymérique. On peut ainsi générer un polymère qui, après déprotection, aura des fonctions acides libres intracaténaires.

La réaction de déprotection mise en oeuvre fait partie des méthodes de déprotection classiques connues de l'homme de l'art. Dans le cas de l'utilisation du diester benzylique de l'acide tartrique, la déprotection peut être effectuée selon les techniques de débenzylation bien connues telles que l'hydrogénation catalytique réalisée à l'hydrogène ou par des techniques de transfert d'hydrogène conservant l'intégrité du polymère.

Si nécessaire, le polyester ainsi obtenu peut être purifié par les méthodes de purification classique connues de l'homme de l'art.

De manière très préférentielle, l'invention a pour objet un procédé tel que défini ci-dessus, caractérisé en ce que l'initiateur de chaîne est le diester benzylique de l'acide tartrique.

A moins qu'ils ne soient définis d'une autre manière, tous les termes techniques et scientifiques utilisés dans la présente demande, ont la même signification que celle couramment comprise par un spécialiste ordinaire du domaine auquel appartient l'invention. De même, toutes les publications, demandes de brevets et toutes autres références mentionnées dans la présente demande, sont incorporées par référence.

Les exemples suivants sont présentés pour illustrer les procédures ci-dessus et ne doivent en aucun cas être considérés comme une limite à la portée de l'invention.

### PARTIE EXPÉRIMENTALE :

### Préparation d'un copolymère 73/27 L-Lactide coglycolide

### Etape 1 : polymérisation

Sous atmosphère inerte, m_{L} g de L-lactide, m_{G} g de glycolide et du tartrate de benzyle (DBT) sont pesés puis homogénéisés au Turbula (environ pendant 5 minutes) avant d'être chargés dans le réacteur sous flux d'azote. 1,3 ml du catalyseur de polymérisation : éthyl hexanoate de Sn(II) (0,2 M dans le toluène) est ajouté et le réacteur est mis sous vide (P<3 mbar) pendant 30 minutes à 50° C. Le mélange est alors soumis à une température d'environ 100° C pendant 30 minutes puis la température est montée à B(° C). L'agitation de 25 t/min est maintenue pendant un temps C (en heure). Le polymère obtenu (PLGT(benzyl)) est purifié par mise sous vide (P<3 mbar) à 130° C pendant 30 minutes puis granulé à environ 100° C.

Les résultats obtenus sont rassemblés dans le tableau 1 ci-dessous.

### Etape 2 : déprotection

135 mg du polymère préparé à l'étape 1 et 700 ml d'acétone sont dissous sous agitation magnétique à température ambiante environ une heure. La solution obtenue est introduite dans un hydrogénateur puis le catalyseur d'hydrogénation (17 g de Pd/C à 10 % (50 % humide)) est introduit. Le réacteur est mis sous vide à température ambiante puis le vide est cassé à l'azote. Trois cycles de pression/décompression à l'hydrogène (P = 8 bar) sont effectués. L'ensemble est maintenu sous agitation à 50° C et la pression est régulée à 8 bar pendant 3 heures. Un contrôle RMN est effectué pour mesurer le taux résiduel du groupement protecteur. Lorsque le taux résiduel est inférieur à 0,1 %, la suspension est filtrée sur lit d'agent d'aide à la filtration (tclarcel , cellulose, ...).

### Etape 3 : purification

Le polyester obtenu est purifié par voie solvant.

Les résultats obtenus sont rassemblés dans le tableau 2 ci-dessous.

**Tableau 1:**

| Exemple | Charge (g)⁽¹⁾ | Initiateur % (mole) ⁽²⁾ | B (° C) | C (heure) |
|---|---|---|---|---|
| 1 | 400 | acide tartrique 1,00 % soit 4,45 g | 200 | 2 |
| 2 | 175 | DBT 2,00 % soit 8,63 g | 200 | 2 |
| 3 | 175 | DBT 3,00 % soit 12,90 g | 200 | 2 |
| 4 | 175 | DBT 1,75% soit 7,50 g | 200 | 2 |
| 5 | 400 | DBT 1,40 % soit 13,80 g | 200 | 0,75 |
| 6 | 400 | DBT 1,40 % soit 13,80 g | 200 | 3 |
| 7 | 175 | DBT 1,40 % soit 6,00 g | 160 | 3 |
| 8 | 175 | DBT 1,60 % soit 6,90 g | 140 | 3 |
| 9 | 175 | DBT 1,45 % soit 6,25 g | 125 | 3,25 |
| 10 | 1000 | DBT 1,45% soit 35,6 g | 125 | 3,25 |
| 11 | 1000 | DBT 2,3 % soit 56,9 g | 125 | 3,5 |
| 12 | 1000 | DBT 2,8 % soit 69,6 g | 125 | 3,5 |

| | | | | |
|---|---|---|---|---|
| ⁽¹⁾ pour une charge de 175 g : m_{L} = 135,6 g et m_{G} = 39,4 g ; pour une charge de 400 g : m_{L} = 310 g et m_{G} = 90 g ; pour une charge de 1000 g : m_{L} = 775 g et m_{G} = 225 g. | | | | |
| ⁽²⁾ pourcentage par rapport aux monomères | | | | |

**Tableau 2:**

| Exemple | M_{w} | Acide tartrique (% molaire) ⁽³⁾ | Ester tartique (% molaire) ⁽⁴⁾ |
|---|---|---|---|
| 1 | 38700 | <0,1 | 0,15 |
| 2 | 16500 | 0,6 | 0,15 |
| 3 | 12000 | 0,85 | 0,34 |
| 4 | 15500 | 0,3 | 0,05 |
| 5 | 20500 | 0,5 | 0,10 |
| 6 | 16000 | 0,1 | 0,05 |
| 7 | 23000 | 0,85 | 0,10 |
| 8 | 15800 | 0,61 | 0,07 |
| 9 | 21300 | 0,67 | 0,00 |
| 10 | 25100 | 0,70 | 0,00 |
| 11 | 16800 | 1,10 | 0,00 |
| 12 | 13333 | 1,40 | 0,00 |

| | | | |
|---|---|---|---|
| ⁽³⁾ teneur en acide tartrique libre | | | |
| ⁽⁴⁾ teneur en acide tartrique dont au moins une fonction a subi une transestérification. | | | |

Avec l'usage d'un initiateur tel que le diester benzylique de l'acide tartrique (DBT), nous constatons l'accélération du phénomène de polymérisation : lors d'une polymérisation initiée à l'acide tartrique, la réaction démarre réellement après un certain temps de chauffage qui peut aller jusqu'à 30 minutes au delà de 160-180° C, temps pendant lequel il peut se produire les phénomènes de dégradation mentionnés plus avant. Avec le diester benzylique de l'acide tartrique, la réaction démarre instantanément à une température inférieure ou égale à 125° C et est pratiquement terminée en 210 minutes.

Ce phénomène est un avantage certain pour éviter les dégradations thermiques susceptibles d'intervenir lors de chauffages prolongés. Il faut noter qu'un chauffage prolongée à haute température (160-180°C) provoque des phénomènes de transestérification y compris avec un initiateur tel que le DBT comme cela est illustré dans le tableau 3 ci-dessous pour une charge de 1000 g.

**Tableau 3 :**

| Exemple | Initiateur % (mole) | B (°C) | C (heure) | M_{w} | Acide tartrique | Ester tartique |
|---|---|---|---|---|---|---|
| 10 | 1,45% soit 35,6 g | 125 | 3,255 | 25 100 | 0,70 | 0,00 |
| 10a | 1,45% soit 35,6 g | 200 | 1 | 26 000 | 0,57 | 0,10 |
| 10b | 1,45% soit 35,6 g | 200 | 2 | 22800 | 0,42 | 0,14 |
| 10c | 1,45 % soit 35,6 g | 200 | 3 | 21 600 | 0,31 | 0,13 |
| | | | | | | |
| 11 | 2,3 % soit 56,9 g | 125 | 3,5 | 16800 | 1,10 | 0,00 |
| 11a | 2,3 % soit 56,9 g | 160 | 1 | 18 300 | / | / |
| 11b | 2,3 % soit 56,9 g | 180 | 1 | 18 000 | 0,9 | 0,12 |
| 11c | 2,3 % soit 56,9 g | 200 | 1 | 18 500 | 0,67 | 0,18 |

## Revendications

1. Procédé de préparation de polyesters contenant plusieurs fonctions acides libres disposées en milieu de chaîne, par polymérisation par ouverture de cycle en présence d'un initiateur de chaîne : le diester benzylique de l'acide tartrique dont le radical phényle est éventuellement substitué.

2. Procédé selon la revendication 1, **caractérisé en ce que** le polyester est à base de l'un des composés suivants : acide L-lactique, acide D-lactique, acide DL-lactique, ε-caprolactone, p-dioxanone, acide ε-caproïque, oxalate d'alkylène, oxalate de cycloalkylène, succinate d'alkylène, β-hydroxybutyrate, carbonate de triméthylène substitué ou non substitué, 1,5-dioxepan-2-one, 1,4-dioxepan-2-one, glycolide, acide glycolique, L-lactide, D-lactide, DL-lactide, méso-lactide ; et tous les isomères optiquement actifs, les racémates ou copolymères de ces derniers.

3. Procédé selon la revendication 1, **caractérisé en ce que** le polyester est à base de l'un des composés suivants : acide L-lactique, acide D-lactique, acide DL-lactique, ε-caprolactone, p-dioxanone, acide ε-caproïque, carbonate de triméthylène substitué ou non substitué, glycolide, acide glycolique, L-lactide, D-lactide, DL-lactide, méso-lactide ; et tous les isomères optiquement actifs, les racémates ou copolymères de ces derniers.

4. Procédé selon la revendication 3, **caractérisé en ce que** le polyester est à base de l'un des composés suivants : acide L-lactique, acide D-lactique, acide DL-lactique, glycolide, acide glycolique, L-lactide, D-lactide, DL-lactide, méso-lactide ; et tous les isomères optiquement actifs, les racémates ou copolymères de ces derniers.

5. Procédé selon l'une des revendications précédentes, **caractérisé en ce que** l'initiateur de chaîne est le diester benzylique de l'acide tartrique.

6. Procédé selon l'une des revendications précédentes et comprenant :
- la préparation d'un polyester par polymérisation par ouverture de cycle en présence de l'initiateur de chaîne ;
- la déprotection des fonctions carboxy de l'initiateur de chaînes.

## Claims

1. Process for the preparation of polyesters containing several free acid functions arranged in the middle of the chain, by ring-opening polymerization in the presence of a chain initiator : tartaric acid benzyl diester, the phenyl radical of which is optionally substituted.

2. Process according to claim 1, **characterized in that** the polyester is based on one of the following compounds : L-lactic acid, D-lactic acid, DL-lactic acid, ε-caprolactone, p-dioxanone, ε-caproic acid, alkylene oxalate, cycloalkylene oxalate, alkylene succinate, β-hydroxybutyrate, substituted or non-substituted trimethylene carbonate, 1,5-dioxepan-2-one, 1,4-dioxepan-2-one, glycolide, glycolic acid, L-lactide, D-lactide, DL-lactide, meso-lactide ; and all the optically active isomers, racemates or copolymers thereof.

3. Process according to claim 1, **characterized in that** the polyester is based on one of the following compounds : L-lactic acid, D-lactic acid, DL-lactic acid, ε-caprolactone, p-dioxanone, ε-caproic acid, substituted or non-substituted trimethylene carbonate, glycolide, glycolic acid, L-lactide, D-lactide, DL-lactide, meso-lactide; and all the optically active isomers, racemates or copolymers thereof.

4. Process according to claim 3, **characterized in that** the polyester is based on one of the following compounds : L-lactic acid, D-lactic acid, DL-lactic acid, glycolide, glycolic acid, L-lactide, D-lactide, DL-lactide, meso-lactide ; and all the optically active isomers, racemates or copolymers thereof.

5. Process according to one of the preceding claims, **characterized in that** the chain initiator is tartaric acid benzyl diester.

6. Process according to one of the preceding claims and comprising :
- the preparation of a polyester by ring-opening polymerization in the presence of the chain initiator ;
- the deprotection of the carboxy functions of the chain initiator.

## Patentansprüche

1. Verfahren zur Herstellung von Polyestern, die mehrere, in der Mitte der Kette angeordnete freie Säurefunktionen enthalten, mittels Ringöffnungspolymerisation in Gegenwart eines Kettenstarters: Weinsäuredibenzylester, dessen Phenylrest gegebenenfalls substituiert ist.

2. Verfahren gemäß Anspruch 1, **dadurch gekennzeichnet, dass** der Polyester auf einer der folgenden Verbindungen basiert: L-Milchsäure, D-Milchsäure, DL-Milchsäure, ε-Caprolacton, p-Dioxanon, ε-Capronsäure, Alkylenoxalat, Cycloalkylenoxalat, Alkylensuccinat, β-Hydroxybuttersäure, substituiertes oder unsubstituiertes Trimethylencarbonat, 1,5-Dioxepan-2-on, 1,4-Dioxepan-2-on, Glykolid, Glycolsäure, L-Lactid, D-Lactid, DL-Lactid, meso-Lactid, und alle optisch aktiven lsomere, Racemate oder Copolymere dieser letzteren.

3. Verfahren gemäß Anspruch 1, **dadurch gekennzeichnet, dass** der Polyester auf einer der folgenden Verbindungen basiert: L-Milchsäure, D-Milchsäure, DL-Milchsäure, ε-Caprolacton, p-Dioxanon, ε-Capronsäure, substituiertes oder unsubstituiertes Trimethylencarbonat, Glykolid, Glycolsäure, L-Lactid, D-Lactid, DL-Lactid, meso-Lactid, und alle optisch aktiven Isomere, Racemate oder Copolymere dieser letzteren.

4. Verfahren gemäß Anspruch 3, **dadurch gekennzeichnet, dass** der Polyester auf einer der folgenden Verbindungen basiert: L-Milchsäure, D-Milchsäure, DL-Milchsäure, Glykolid, Glycolsäure, L-Lactid, D-Lactid, DL-Lactid, meso-Lactid, und alle optisch aktiven Isomere, Racemate oder Copolymere dieser letzteren.

5. Verfahren gemäß einem der vorhergehenden Ansprüche, **dadurch gekennzeichnet, dass** es sich bei dem Kettenstarter um Weinsäuredibenzylester handelt.

6. Verfahren gemäß einem der vorhergehenden Ansprüche und umfassend:
- die Herstellung eines Polyesters mittels Ringöffnungspolymerisation in Gegenwart des Kettenstarters,
- das Entschützen der Carboxylfunktionen des Kettenstarters.
